# EUROPÄISCHE PATENTSCHRIFT

(11) **EP 2 647 814 B1**
(45) Veröffentlichungstag und Bekanntmachung des Hinweises auf die Patenterteilung: **05.04.2017**
(21) Anmeldenummer: 12007763.1
(22) Anmeldetag: 16.11.2012
(51) Int. Cl.: F02D 41/00, F02D 9/06, F02M 26/00

(54) **Verfahren und Vorrichtung zum Steuern des Motorbremsbetriebs an Brennkraftmaschinen**
Method and device for controlling the engine braking operation of combustion engines
Procédé et dispositif de commande du fonctionnement du frein-moteur sur des moteurs à combustion interne

(30) Priorität: 02.04.2012 AT 3972012
(43) Veröffentlichungstag der Anmeldung: 09.10.2013
(60) Teilanmeldung: 16001212.6
(73) Patentinhaber: MAN Truck & Bus Österreich AG, 4400 Steyr (AT)
(72) Erfinder: Chaves, Rodrigo, Penedo-Resende-RJ (BR); Raab, Gottfried, 4320 Perg (AT); Raup, Markus, 4800 Attnang-Puchheim (AT); Gohm, Lukas, 4400 Steyr (AT)
(74) Vertreter: Liebl, Thomas

(56) Entgegenhaltungen:
- WO-A1-02/18761
- WO-A1-99/24732
- JP-A- 2001 280 173
- US-A- 4 787 044
- US-A1- 2011 011 081
- US-B1- 6 283 091

## Beschreibung

Die vorliegende Erfindung betrifft ein Verfahren zum Steuern des Motorbremsbetriebs an Brennkraftmaschinen in Kraftfahrzeugen gemäß dem Oberbegriff des Patentanspruchs 1 sowie eine Vorrichtung zur Durchführung des Verfahrens nach dem Oberbegriff des Anspruchs 9.

Bei hochverdichteten Brennkraftmaschinen mit Bremsklappe im Abgassystem können im Schubbetrieb (Motorbremsbetrieb) hohe Temperaturen in den Brennräumen auftreten, die gegebenenfalls für die Einspritzventile der Direkteinspritzung schädlich sein können. Durch die DE 198 47 388 B4 ist es bekannt, zur Kühlung der Einspritzventile auch im Motorbremsbetrieb Kraftstoff einzuspritzen.

Ferner ist aus der JP 2001 280 173 A ein Verfahren zur Motorbremsung bekannt, bei dem das Abgasrückführ-Ventil unmittelbar beim Schließen der Motorbremsklappe geöffnet wird, um einen Druckstoß beim Schließen der Motorbremsklappe abzufangen. Zudem soll zur Vermeidung eines Wärmeeintrags in das Kühlwasser das Abgasrückführ-Ventil erst dann zugemacht werden, wenn die Kühlwassertemperatur zu hoch werden würde.

Bei der WO 02/18761 A1 soll im Motorbremsbetrieb eine zu hohe Drehzahl einer Abgasturbolader-Turbine, ein zu hoher Abgasdruck im Abgasstrang und eine zu hohe Abgastemperatur vermieden werden. Hierzu werden die aktuelle Turbinen-Drehzahl, der aktuelle Abgasdruck im Abgasstrang und die aktuelle Abgastemperatur gemessen und mit definierten Maximal-Werten verglichen. Sofern einer dieser Maximal-Werte überschritten wird, wird das geschlossene AGR-Ventil geöffnet.

Die US 6 283 091 B1 betrifft ein Verfahren, bei dem während des Motorbremsbetriebs mittels Einspritzdüsen einer Direkteinspritzung eine vorbestimmte Menge an Kraftstoff in den Brennraum einer Brennkraftmaschine gefördert wird. Auf diese Weise können die Einspritzdüsen während des Motorbremsbetriebs gekühlt werden.

Aus der US 4 787 044 A geht ein Verfahren zum Steuern der Drehzahl einer Fahrzeug-Brennkraftmaschine hervor, bei dem während der Betätigung einer Fahrzeug-Kupplung eine Bremsklappe zum Rückstauen der Abgase im Abgasstrang derart gesteuert wird, dass die Drehzahl der Brennkraftmaschine und die Drehzahl einer Eingangswelle eines Fahrzeug-Getriebes identisch sind.

Aufgabe der Erfindung ist es, ein Verfahren aufzuzeigen, mittels dem ohne baulichen Mehraufwand einer Überhitzung insbesondere der Einspritzventile entgegengewirkt werden kann. Ferner wird eine vorteilhafte Vorrichtung zur Durchführung des Verfahrens vorgeschlagen.

Diese Aufgabe wird mit den Merkmalen der unabhängigen Patentansprüche gelöst. Vorteilhafte Weiterbildungen der Erfindung sind Gegenstand der Unteransprüche.

Gemäß Anspruch 1 wird vorgeschlagen, dass im Motorbremsbetrieb das AGR-Ventil der Abgasrückführeinrichtung abhängig von wenigstens einem definierten Betriebsparameter der Brennkraftmaschine in einer definierten bzw. vorgegebenen Weise mehr oder minder aufgesteuert wird. Erfindungsgemäß wird das AGR-Ventil abhängig von der jeweils aktuell vorgegebenen und/oder ermittelten und/oder erfassten Temperatur der Einspritzdüsen der Direkteinspritzung im Motorbremsbetrieb in definierter und/oder vorgegebener Weise geöffnet.

Damit können die kritischen Temperaturen an den Einspritzventilen vermieden werden, wobei die Motorbremsleistung geringfügig vermindert wird. Als besonders vorteilhaft ist dabei anzusehen, dass bei vorhandener Abgasrückführeinrichtung lediglich Software-Änderungen an einem vorhandenen Steuergerät erforderlich sind, wodurch das Verfahren gegebenenfalls auch problemlos an vorhandenen Brennkraftmaschinen nachrüstbar ist.

In einer besonders einfachen Umsetzung des Verfahrens kann das AGR-Ventil abhängig von der Drehzahl der Brennkraftmaschine im Motorbremsbetrieb in definierter und/oder vorgegebener Weise mehr oder weniger geöffnet werden, insbesondere dergestalt, dass unterschiedlichen Drehzahlen oder unterschiedlichen Drehzahlbereichen während des Motorbremsbetriebs unterschiedliche Öffnungsgrade des AGR-Ventils zugeordnet sind. Zum Beispiel kann bei einer AGR-Klappe als AGR-Ventil bei einer ersten, hohen Drehzahl ein größerer Öffnungswinkel vorgegeben sein als bei einer demgegenüber kleineren Drehzahl. Die graduelle Anpassung des Öffnungsgrades kann hier zum Beispiel linear, aber auch stufenweise erfolgen. Damit gelingt eine relativ einfache Anpassung an die jeweils auftretenden Abgasmassenströme und Druckverhältnisse mit einer bevorzugt höheren Bremsleistung im unteren Drehzahlbereich und einer geringeren Bremsleistung im höheren Drehzahlbereich der Brennkraftmaschine.

Gemäß einer bevorzugten Ausführungsform sind unterschiedlichen Temperaturen oder Temperaturbereichen der Einspritzdüsen auch unterschiedliche Öffnungsgrade des AGR-Ventils zugeordnet und/oder wird bei Erreichen eines vorgegebenen Temperaturschwellwertes das AGR-Ventil vollständig geöffnet. Beispielsweise kann vorgesehen sein, dass ab Start des Motorbremsbetriebs der Öffnungsgradient des AGR-Ventils mit zunehmender Temperatur der Einspritzdüsen solange zunimmt, bis bei Erreichen einer definierten Schwellwerttemperatur das AGR-Ventil vollständig geöffnet ist und für eine vorgegebene Zeitdauer bleibt.

Zur Erzielung einer möglichst hohen Bremsleistung bei beginnendem Motorbremsbetrieb kann ferner das AGR-Ventil erst mit einer Zeitverzögerung, das heißt nach einem definierten Zeitintervall ausgehend vom Schließen der Bremsklappe geöffnet werden. Damit wird das Temperatur-Beharrungsvermögen der Einspritzdüsen bis zum Auftreten der kritischen Temperaturschwelle für eine volle Bremsleistung genutzt und erst dann das AGR-Ventil angesteuert. Grundsätzlich kann das AGR-Ventil aber auch bereits unmittelbar zu Beginn des Motorbremsbetriebs geöffnet werden.

Weiter kann durch eine Verknüpfung von mehreren definierten bzw. vorgegebenen Betriebsparametern der Brennkraftmaschine die Öffnung des AGR-Ventils so gesteuert werden, dass eine definierte Drehzahl der Brennkraftmaschine im Motorbremsbetrieb gehalten wird. Damit wird über das AGR-Ventil in begrenztem Maße eine Geschwindigkeitsregelung des Kraftfahrzeugs im Schubbetrieb erzielt, indem (zum Beispiel überlagert zur Temperatursteuerung) der Motorbremsbetrieb so geregelt wird, dass eine definierte, zum Beispiel über eine Regelanlage gesetzte Drehzahl gehalten wird. Dabei kann eine Verminderung der Bremsleistung über das AGR-Ventil auch dann gesteuert werden, wenn die gesetzte Geschwindigkeit bzw. die Drehzahl der Brennkraftmaschine nicht unterschritten werden soll.

Des Weiteren kann in an sich bekannter Weise im Motorbremsbetrieb über die Direkteinspritzung eine definierte Kraftstoffmenge als Hilfseinspritzung durchgeführt werden, wobei diese Maßnahme zur Erzielung einer höheren Bremsleistung und/oder zu einer Temperaturabsenkung an den Einspritzdüsen ausgelegt sein kann.

Konkret kann zur Durchführung des Verfahrens ein beliebiges Kontrollsystem, zum Beispiel ein Steuergerät bzw. einen Steuergeräteverbund vorgesehen sein, mittels dem unter anderem das AGR-Ventil der Abgasrückführeinrichtung angesteuert wird. Im Motorbremsbetrieb kann dem Steuergerät bzw. von diesem ein Motorbremsbetriebsmodus überlagert sein, der zumindest abhängig von Signalen eines Drehzahlsensors und/oder Temperatursensors und des Schließens der Bremsklappe im Abgassystem die Öffnung des AGR-Ventils steuert.

Dem Steuergerät können als Temperatursignal Temperaturwerte der Brennkraftmaschine und/oder der Einspritzventile und/oder der Ansaugluft zugeführt werden, wobei zum Beispiel vorgesehen sein kann, dass das AGR-Ventil erst bei Erreichen eines definierten Temperaturschwellwertes geöffnet werden kann. Die Temperaturwerte können Temperaturmodellen bzw. Kennfeldern entnommen sein und/oder von Ersatzgrößen, wie zum Beispiel der Drehzahl, abgeleitet sein und/oder grundsätzlich auch mittels Temperatursensoren erfasst werden.

Schließlich kann die Brennkraftmaschine in an sich bekannter Weise mit Abgasturboaufladung betrieben sein, wobei die Bremsklappe vor oder nach der Abgasturbine, jedoch stromab der abzweigenden Rückführleitung der Abgasrückführeinrichtung positioniert ist.

Die sich mit der Vorrichtung ergebenden Vorteile wurden bereits zuvor ausführlich gewürdigt, so dass diesbezüglich auf die zuvor gemachten Ausführungen verwiesen wird.

Ein Ausführungsbeispiel der Erfindung ist im Folgenden anhand der beiliegenden, schematischen Zeichnung näher erläutert.

Es zeigen:
- Fig. 1: als Blockschaltbild eine mehrzylindrische Reihen-Brennkraftmaschine mit Abgasturboaufladung und einer Abgasrückführeinrichtung sowie mit einer im Abgassystem angeordneten Bremsklappe zum Steuern eines Motorbremsbetriebs; und
- Fig. 2: eine Grafik mit Darstellung des Motorbremsbetriebs, der momentanen Bremsleistung und des Temperaturverlaufs an den Einspritzventilen der Brennkraftmaschine beeinflusst von der Öffnung des AGR-Ventils der Abgasrückführeinrichtung.

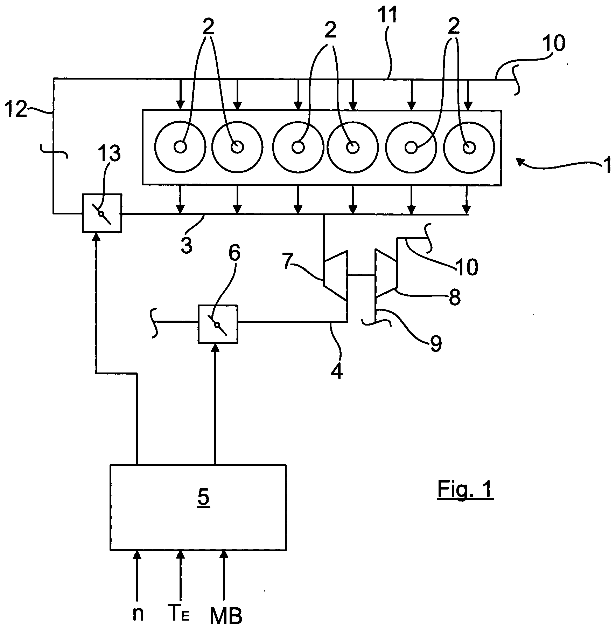

In der Fig. 1 ist eine Brennkraftmaschine 1 (zum Beispiel ein Dieselmotor) mit hier lediglich beispielhaft sechs Zylindern und einer Direkt-Kraftstoffeinspritzung in deren Brennräume über nur angedeutete Einspritzventile 2 dargestellt.

Die Brennkraftmaschine 1 weist ein nur teilweise dargestelltes Abgassystem mit einem Abgaskrümmer 3 und einer Abgasleitung 4 auf. In die Abgasleitung 4 ist eine über ein elektronisches Steuergerät 5 steuerbare Bremsklappe 6 eingesetzt.

Die Brennkraftmaschine 1 ist mit Abgasturboaufladung betrieben, wobei der Abgasturbolader mit seiner Abgasturbine 7 in die Abgasleitung 4 integriert ist.

Der Verdichter 8 des Abgasturboladers saugt über eine nur angedeutete Einlassleitung 9 Verbrennungsluft an und fördert sie über eine Ladedruckleitung 10 und einen Ansaugverteiler 11 zu den Brennräumen der Brennkraftmaschine 1.

Zwischen dem Abgaskrümmer 3 und dem Ansaugverteiler 11 ist eine Abgasrückführleitung 12 vorgesehen, in die neben einem Abgaskühler (nicht dargestellt) ein Abgasrückführ- (AGR) Ventil 13 eingesetzt ist. Das AGR-Ventil 13 ist nach Maßgabe von Betriebsdaten der Brennkraftmaschine 1 über das Steuergerät 5 gesteuert. Das AGR-Ventil 13 kann zum Beispiel ein beliebiges Absperr- bzw. Drosselelement sein, das zum Beispiel mittels eines Proportionalventils angesteuert wird.

Die Einspritzdüsen 2 sind an eine Kraftstoffeinspritzeinrichtung (zum Beispiel common rail) angeschlossen und spritzen im Direkteinspritzverfahren die über das Steuergerät 5 ermittelte Kraftstoffmenge ein. Es versteht sich, dass die Brennkraftmaschine mit ihren Betriebseinrichtungen, soweit nicht anders beschrieben, üblicher Bauart und Auslegung sein kann.

Der reguläre Motorbremsbetrieb wird zum Beispiel über einen Fußschalter (nicht dargestellt) aktviert, wobei dem Steuergerät 5 ein Signal MB übermittelt wird und dieses die Bremsklappe 6 ansteuert bzw. schließt. Im regulären Motorbremsbetrieb ist dabei das AGR-Ventil 13 geschlossen und die Kraftstoffeinspritzung unterbrochen.
Dem Steuergerät 5 werden neben zahlreichen Betriebsparametern die Drehzahl n der Brennkraftmaschine 1 mittels eines Drehzahlsensors und zum Beispiel modellbasiert oder von Ersatzgrößen abgeleitet oder über einen, an einem der Einspritzventile 2 angeordneten Temperatursensor die Temperatursignale T_{E} zugeführt.

Dem Steuergerät 5 ist eine Software mit einem Motorbremsbetriebsmodus überlagert, der bei aktiviertem Motorbremsbetrieb und geschlossener Bremsklappe 6 abhängig von der vorgegebenen Temperatur T_{E} der Einspritzventile 2 und/oder abhängig von der momentanen Drehzahl n der Brennkraftmaschine 1 das AGR-Ventil 13 graduell bzw. kontinuierlich mehr oder minder öffnet und der des Weiteren eine Hilfseinspritzung von Kraftstoff über die Einspritzventile 2 steuert.

Ist eine definierte Temperaturschwelle an den Einspritzventilen 2 erreicht und/oder liegt eine definierte Motordrehzahl n im Motorbremsbetrieb an, so wird nach Verstreichen eines definierten Zeitintervalls (kurze volle Motorbremsleistung) das AGR-Ventil 13 aufgesteuert, wodurch Abgas über die Rückführleitung 12 rückgeführt und der Abgasgegendruck stromauf der Abgasklappe 13 einhergehend mit einer Verminderung der Motorbremsleistung abgesenkt wird. Zugleich, vorab oder verzögert kann die Hilfseinspritzung von Kraftstoff über die Einspritzventile 2 zu deren zusätzlicher Kühlung gesteuert werden.

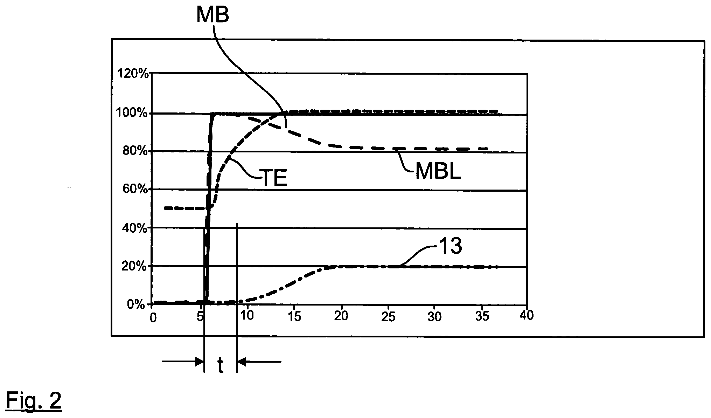

Die Grafik gemäß Fig. 2 zeigt beispielsweise den Einfluss der Abgasrückführung im Motorbremsbetrieb auf die Temperatur T_{E} der Einspritzventile 2, wodurch dort schädliche Übertemperaturen vermieden werden können.

Die ausgezogene Linie MB beschreibt den Zustand der Bremsklappe 6, die von 0% ausgehend auf 100% durch das Signal MB geschlossen wird, um den Motorbremsbetrieb auszulösen.

Die gestrichelte Linie T_{E} zeigt den daraufhin folgenden Anstieg der Temperatur der Einspritzdüsen 2, wobei ein Zeitintervall t verstreichen kann, bevor, wie dies mit der strichpunktierten Linie 13 angezeigt ist, das AGR-Ventil 13 zunehmend geöffnet wird.

Die Öffnung des AGR-Ventils 13 bewirkt eine Verminderung der Motorbremsleistung gemäß Linie MBL und hat gleichzeitig zur Folge, dass die Temperatur T_{E} nicht weiter ansteigt.

Wie ausgeführt, wird die Öffnung des AGR-Ventils 13 auch beeinflusst von der Drehzahl n der Brennkraftmaschine, so dass zum Beispiel vorgesehen sein kann, dass das AGR-Ventil 13 mit zunehmender Drehzahl n weiter aufgesteuert (in der Grafik nicht dargestellt) und damit verbunden der Abgasgegendruck weiter vermindert oder auch konstant gehalten wird.

Über die beschriebene Ansteuerung des AGR-Ventils 13 kann in begrenztem Umfang auch eine Drehzahlregelung bzw. Geschwindigkeitsregelung des Kraftfahrzeugs im Schubbetrieb über das Steuergerät 5 bewirkt werden, wobei dieses verknüpft mit einer Regelanlage (nicht dargestellt) eine gesetzte Motordrehzahl n dadurch aufrechterhält, dass das AGR-Ventil 13 in definiertem Maße mehr oder minder aufgesteuert wird,

Es versteht sich, dass dabei die Temperaturschwelle an den Einspritzventilen 2 Vorrang hat und bei Erreichen der Temperaturschwelle die Regelfunktion unterbrochen wird.

Mit der Aufhebung des Motorbremsbetriebs über das Signal MB und durch Öffnen der Bremsklappe 6 wird gleichzeitig das AGR-Ventil 13 zunächst geschlossen, bevor über das Steuergerät 5 wieder der reguläre Betrieb der Brennkraftmaschine 1 gesteuert wird.

Die Erfindung ist nicht auf das beschriebene Ausführungsbeispiel beschränkt.

So können in einer vereinfachten Ausführung auch nur die Drehzahlsignale n in Verbindung gegebenenfalls mit einer Hilfseinspritzung verwendet sein, um kritische Übertemperaturen an den Einspritzventilen 2 im Motorbremsbetrieb zu vermeiden.

Die Abgasturboaufladung kann gegebenenfalls auch über eine Registeraufladung mit einem Niederdruck- und einem Hochdruck-Abgasturbolader erfolgen; gegebenenfalls kann auch keine Abgasturboaufladung der Brennkraftmaschine vorgesehen sein.

Weitere Parameter zur Steuerung des AGR-Ventils 13 der Abgasrückführeinrichtung können Sensoren für den Abgasgegendruck stromauf der Abgasklappe 6, die Abgastemperatur, die Zylindereinlasstemperatur, die Temperatur der Brennkraftmaschine, etc. sein. Einige dieser Parameter sind in herkömmlichen Steuergeräten 5 ohnehin bereits abgelegt und entsprechend auswertbar.

Das Steuergerät 5 kann grundsätzlich ein Motorsteuergerät sein, ist jedoch bevorzugt ein vom Motorsteuergerät unabhängiges, elektronisches Steuergerät mit den beschriebenen Eingängen n, MB, TE, etc..

### BEZUGSZEICHENLISTE

- 1: Brennkraftmaschine
- 2: Einspritzventile
- 3: Abgaskrümmer
- 4: Abgasleitung
- 5: Steuergerät
- 6: Bremsklappe
- 7: Abgasturbine
- 8: Einlassleitung
- 9: Verdichter
- 10: Ladedruckleitung
- 11: Ansaugverteiler
- 12: Rückführleitung
- 13: Abgasrückführventil
- n: Motordrehzahl
- T_{E}: Temperatur Einspritzventile
- MB: Signal Motorbremsbetrieb
- MBL: Motorbremsleistung

## Patentansprüche

1. Verfahren zum Steuern des Motorbremsbetriebs an Brennkraftmaschinen (1) für Kraftfahrzeuge, wobei die Brennkraftmaschine (1) mit Direkteinspritzung des Kraftstoffs betrieben ist und im Abgassystem eine steuerbare Bremsklappe (6) zum Rückstauen der Abgase im Motorbremsbetrieb vorgesehen ist, sowie ferner mit einer Abgasrückführeinrichtung mit einem stromauf der Bremsklappe angeordnetem Abgasrückführ-(AGR)Ventil (13) und einer Rückführleitung (12), die das Abgassystem mit dem Ansaugsystem der Brennkraftmaschine (1) verbindet und im Fahrbetrieb eine definierte Abgasrückführmenge zur Verbrennungsluft steuert, wobei im Motorbremsbetrieb (MB) das AGR-Ventil (13) abhängig von wenigstens einem vorgegebenen Betriebsparameter (n, T_{E}) der Brennkraftmaschine (1) aufgesteuert wird, **dadurch gekennzeichnet, dass** das AGR-Ventil (13) abhängig von der aktuell vorgegebenen und/oder ermittelten und/oder erfassten Temperatur (T_{E}) der Einspritzdüsen (2) der Direkteinspritzung im Motorbremsbetrieb in definierter und/oder vorgegebener Weise geöffnet wird.

2. Verfahren nach Anspruch 1, **dadurch gekennzeichnet, dass** das AGR-Ventil (13) abhängig von der Drehzahl (n) der Brennkraftmaschine (1) im Motorbremsbetrieb in definierter und/oder vorgegebener Weise geöffnet wird, wobei vorzugsweise vorgesehen ist, dass unterschiedlichen Drehzahlen oder unterschiedlichen Drehzahlbereichen der Motorbremsbetriebsphase unterschiedliche Öffnungsgrade des AGR-Ventils (13) zugeordnet sind.

3. Verfahren nach Anspruch 1 oder 2, **dadurch gekennzeichnet, dass** unterschiedlichen Temperaturen (T_{E}) oder Temperaturbereichen der Einspritzdüsen (2) unterschiedliche Öffnungsgrade des AGR-Ventils (13) zugeordnet sind und/oder bei Erreichen einer definierten Temperatur (Temperaturschwellwert) das AGR-Ventil (13) vollständig geöffnet wird.

4. Verfahren nach einem der vorhergehenden Ansprüche, **dadurch gekennzeichnet, dass** das AGR-Ventil (13) erst nach einem definierten Zeitintervall (t) ausgehend vom Schließen der Bremsklappe (6) und damit zeitverzögert geöffnet wird.

5. Verfahren nach einem der vorhergehenden Ansprüche, **dadurch gekennzeichnet, dass** durch eine Verknüpfung von mehreren, vorgegebenen und/oder definierten Betriebsparametern der Brennkraftmaschine (1) die Öffnung des AGR-Ventils (13) so gesteuert wird, dass eine definierte Drehzahl (n) der Brennkraftmaschine (1) im Motorbremsbetrieb gehalten wird.

6. Verfahren nach einem der vorhergehenden Ansprüche, **dadurch gekennzeichnet, dass** im Motorbremsbetrieb über die Direkteinspritzung (2) eine definierte Kraftstoffmenge als Hilfseinspritzung eingespritzt wird.

7. Verfahren nach einem der vorhergehenden Ansprüche, **dadurch gekennzeichnet, dass** einem elektronischen Steuergerät (5) im Motorbremsbetrieb ein Motorbremsbetriebsmodus vorgegeben und/oder überlagert wird, der zumindest abhängig von einem Drehzahl- und/oder Temperatursignal sowie des Schließens der Bremsklappe (6) im Abgassystem die Öffnung des AGR-Ventils (13) steuert.

8. Verfahren nach Anspruch 7, **dadurch gekennzeichnet, dass** dem Steuergerät (5) als Temperatursignal ermittelte und/oder erfasste Temperaturwerte der Brennkraftmaschine und/oder der Einspritzventile (2) und/oder der Ansaugluft zugeführt werden.

9. Verfahren nach Anspruch 7 oder 8, **dadurch gekennzeichnet, dass** die Brennkraftmaschine (1) mit Abgasturboaufladung betrieben wird, wobei die Bremsklappe (6) vor oder nach der Abgasturbine (7) jedoch stromab der abzweigenden Rückführleitung (12) der Abgasrückführeinrichtung positioniert ist.

10. Vorrichtung zur Durchführung eines Verfahrens zum Steuern des Motorbremsbetriebs an Brennkraftmaschinen für Kraftfahrzeuge, insbesondere nach einem der vorhergehenden Verfahrensansprüche, mit einer mit Direkteinspritzung betriebenen Brennkraftmaschine, mit einer steuerbaren Bremsklappe im Abgassystem, mit einer Abgasrückführeinrichtung, die eine Rückführleitung und ein stromauf der Bremsklappe angeordnetes AGR-Ventil aufweist, wobei die Rückführleitung das Abgassystem mit dem Ansaugsystem der Brennkraftmaschine verbindet, **dadurch gekennzeichnet, dass** das AGR-Ventil (13) so ausgebildet und/oder mit einem elektronischen Steuergerät (15) gekoppelt ist, dass dieses im Motorbremsbetrieb (MB) in Abhängigkeit von der Temperatur (T_{E}) der Einspritzdüsen (2) der Direkteinspritzung der Brennkraftmaschine in definierter und/oder vorgegebener Weise aufgesteuert ist.

## Claims

1. Method for controlling the engine braking operation in combustion engines (1) for motor vehicles, wherein the combustion engine (1) is operated with direct injection of the fuel, and a controllable brake valve (6) for retaining the exhaust gases in the engine braking operation is provided in the exhaust system, and also having an exhaust gas recirculation device having an exhaust gas recirculation (EGR) valve (13) which is arranged upstream of the brake valve, and a recirculation line (12) which connects the exhaust system to the intake system of the combustion engine (1), and in the driving operation controls a defined exhaust gas recirculation quantity with respect to the combustion air, wherein in the engine braking operation (MB) the EGR valve (13) is opened as a function of at least one prescribed operating parameter (n, T_{E}) of the combustion engine (1), **characterized in that** the EGR valve (13) is opened as a function of the currently prescribed and/or determined and/or detected temperature (T_{E}) of the injection nozzles (2) of the direct injection in the engine braking operation in a defined and/or prescribed fashion.

2. Method according to Claim 1, **characterized in that** the EGR valve (13) is opened in the engine braking operation in the defined and/or prescribed fashion as a function of the rotational speed (n) of the combustion engine (1), wherein there is preferably provision that different degrees of opening of the EGR valve (13) are assigned to different rotational speeds or different rotational speed ranges of the engine braking operation phase.

3. Method according to Claim 1 or 2, **characterized in that** different degrees of opening of the EGR valve (13) are assigned to different temperatures (T_{E}) or temperature ranges of the injection nozzles (2), and/or the EGR valve (13) is opened completely when a defined temperature (temperature threshold value) is reached.

4. Method according to one of the preceding claims, **characterized in that** the EGR valve (13) is only opened after a defined time interval (t) starting from the closing of the brake valve (6), and is therefore opened with a delay.

5. Method according to one of the preceding claims, **characterized in that** the opening of the EGR valve (13) is controlled by linking of a plurality of prescribed and/or defined operating parameters of the combustion engine (1) in such a way that a defined rotational speed (n) of the combustion engine (1) is maintained in the engine braking operation.

6. Method according to one of the preceding claims, **characterized in that** in the engine braking operation a defined quantity of fuel is injected as an auxiliary injection via the direct injection (2).

7. Method according to one of the preceding claims, **characterized in that** in the engine braking operation an engine braking operating mode is prescribed to an electronic control unit (5) and/or superimposed therein, said engine braking operating mode controlling the opening of the EGR valve (13) at least as a function of a rotational speed signal and/or temperature signal and of the closing of the brake valve (6) in the exhaust system.

8. Method according to Claim 7, **characterized in that** temperature values of the combustion engine and/or of the injection valves (2) and/or of the intake air which have been determined and/or detected as a temperature signal are fed to the control unit (5).

9. Method according to Claim 7 or 8, **characterized in that** the combustion engine (1) is operated with exhaust gas turbocharging, wherein the brake valve (6) is positioned upstream or downstream of the exhaust gas turbine (7) but downstream of the branching-off recirculation line (12) of the exhaust gas recirculation device.

10. Device for carrying out a method for controlling the engine braking operation in combustion engines for motor vehicles, in particular according to one of the preceding method claims, having a combustion engine which is operated with direct injection, having a controllable brake valve in the exhaust system, having an exhaust gas recirculation device which has a recirculation line and an EGR valve arranged upstream of the brake valve, wherein the recirculation line connects the exhaust system to the intake system of the combustion engine, **characterized in that** the EGR valve (13) is embodied and/or coupled to an electronic control unit (15) in such a way that in the engine braking operation (MB) said control unit (15) is opened in a defined and/or prescribed fashion as a function of the temperature (T_{E}) of the injection nozzles (2) of the direct injection of the combustion engine.

## Revendications

1. Procédé pour commander le fonctionnement de frein moteur sur des moteurs à combustion interne (1) pour véhicules automobiles, le moteur à combustion interne (1) fonctionnant avec injection directe du carburant et un clapet de freinage (6) commandable étant prévu dans le système de gaz d'échappement pour retenir les gaz d'échappement en mode de frein moteur, et comprenant en outre un dispositif de recirculation des gaz d'échappement avec une soupape de recirculation des gaz d'échappement (AGR) (13) disposée en amont du clapet de freinage et une conduite de recirculation (12) qui relie le système de gaz d'échappement au système d'admission du moteur à combustion interne (1) et qui commande, en mode de conduite, une quantité de recirculation de gaz d'échappement définie vers l'air comburant, la soupape AGR (13) étant commandée à l'ouverture en mode de frein moteur (MB) en fonction d'au moins un paramètre de fonctionnement prédéfini (n, T_{E}) du moteur à combustion interne (1), **caractérisé en ce que** la soupape AGR (13) est ouverte de manière définie et/ou prédéfinie en fonction de la température actuellement prédéfinie et/ou déterminée et/ou détectée (T_{E}) des buses d'injection (2) de l'injection directe en mode de frein moteur.

2. Procédé selon la revendication 1, **caractérisé en ce que** la soupape AGR (13) est ouverte de manière définie et/ou prédéfinie en fonction du régime (n) du moteur à combustion interne (1) en mode de frein moteur, et il est de préférence prévu que différents degrés d'ouverture de la soupape AGR (13) soient associés à différents régimes ou différentes plages de régime de la phase de mode de frein moteur.

3. Procédé selon la revendication 1 ou 2, **caractérisé en ce que** différents degrés d'ouverture de la soupape AGR (13) sont associés à différentes températures (T_{E}) ou différentes plages de températures des buses d'injection (2) et/ou la soupape AGR (13) est complètement ouverte une fois atteinte une température définie (valeur seuil de température).

4. Procédé selon l'une quelconque des revendications précédentes, **caractérisé en ce que** la soupape AGR (13) est seulement ouverte après un intervalle de temps défini (t) à partir de la fermeture du clapet de freinage (6) et par conséquent est ouverte de manière retardée dans le temps.

5. Procédé selon l'une quelconque des revendications précédentes, **caractérisé en ce qu'**en associant plusieurs paramètres de fonctionnement prédéfinis et/ou définis du moteur à combustion interne (1), l'ouverture de la soupape AGR (13) est commandée de telle sorte qu'un régime défini (n) du moteur à combustion interne (1) soit maintenu en mode de frein moteur.

6. Procédé selon l'une quelconque des revendications précédentes, **caractérisé en ce qu'**en mode de frein moteur, une quantité de carburant définie est injectée en tant qu'injection auxiliaire par le biais de l'injection directe (2).

7. Procédé selon l'une quelconque des revendications précédentes, **caractérisé en ce qu'**un mode de fonctionnement à frein moteur est prédéfini et/ou superposé à un appareil de commande électronique (5) en mode de frein moteur, lequel commande l'ouverture de la soupape AGR (13) au moins en fonction d'un signal de régime et/ou de température ainsi que de la fermeture du clapet de freinage (6) dans le système de gaz d'échappement.

8. Procédé selon la revendication 7, **caractérisé en ce que** des valeurs de température déterminées et/ou détectées du moteur à combustion interne et/ou des soupapes d'injection (2) et/ou de l'air d'admission sont acheminées à l'appareil de commande (5) en tant que signal de température.

9. Procédé selon la revendication 7 ou 8, **caractérisé en ce que** le moteur à combustion interne (1) fonctionne par turbocompression des gaz d'échappement, le clapet de freinage (6) étant positionné avant ou après la turbine à gaz d'échappement (7) mais en aval de la ramification de la conduite de recirculation (12) du dispositif de recirculation des gaz d'échappement.

10. Dispositif pour mettre en oeuvre un procédé de commande du mode de frein moteur sur des moteurs à combustion interne pour véhicules automobiles, en particulier selon l'une quelconque des revendications de procédé précédentes, comprenant un moteur à combustion interne fonctionnant avec injection directe, un clapet de freinage commandable dans le système de gaz d'échappement, un dispositif de recirculation des gaz d'échappement qui présente une conduite de recirculation et une soupape AGR disposée en amont du clapet de freinage, la conduite de recirculation reliant le système de gaz d'échappement au système d'admission du moteur à combustion interne, **caractérisé en ce que** la soupape AGR (13) est réalisée et/ou est accouplée à un appareil de commande électronique (15) de telle sorte que celle-ci, en mode de frein moteur (MB), soit commandée de manière définie et/ou prédéfinie en fonction de la température (T_{E}) des buses d'injection (2) de l'injection directe du moteur à combustion interne.
